(19)

Europäisches Patentamt

European Patent Office

Office européen des brevets

(11) **EP 4 545 923 A1**

(12) **EUROPEAN PATENT APPLICATION**
published in accordance with Art. 153(4) EPC

(43) Date of publication:
**30.04.2025   Bulletin 2025/18**

(21) Application number: 23826761.1

(22) Date of filing: **31.03.2023**

(51) International Patent Classification (IPC):
*G01J 3/44* (2006.01)        *G01W 1/00* (2006.01)
*G01S 17/95* (2006.01)        *G01N 21/65* (2006.01)

(52) Cooperative Patent Classification (CPC):
**G01J 3/44; G01N 21/65; G01S 17/95; G01W 1/00**

(86) International application number:
**PCT/JP2023/013550**

(87) International publication number:
**WO 2023/248572 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **24.06.2022   JP 2022101709**

(71) Applicant: Eko Instruments Co., Ltd.
**Tokyo 151-0072 (JP)**

(72) Inventors:
• **YABUKI,Masanori**
  **Uji-shi, Kyoto 611-0011 (JP)**

• **UCHIHO, Yuichi**
  **Tokyo 151-0072 (JP)**
• **MATSUKI, Kazuto**
  **Tokyo 151-0072 (JP)**
• **TAKEUCHI, Eiji**
  **Tokyo 151-0072 (JP)**
• **HASEGAWA, Toshikazu**
  **Tokyo 151-0072 (JP)**

(74) Representative: **Betten & Resch
Patent- und Rechtsanwälte PartGmbB
Maximiliansplatz 14
80333 München (DE)**

(54) **LIDAR LIGHT-RECEIVING DEVICE, LIDAR, AND METEOROLOGICAL OBSERVATION LIDAR**

(57)     The present invention provides a light-receiving device for a lidar that reduces the effects of coincidence loss and crosstalk on measurement results. The present invention provides a light-receiving device for a lidar that detects scattered laser light, the light-receiving device for a lidar including a spectroscopic element that disperses received light to produce wavelength-dispersed light in one axial direction, an optical element that sets a wavelength resolution, with respect to a wavelength dispersion axis direction of the dispersed light, of light having relatively high intensity, within the dispersed light, to be higher than the wavelength resolution, with respect to the wavelength dispersion axis direction of the dispersed light, of light having relatively low intensity, and an array detector that detects the light whose a spectrum has been changed by the optical element.

[Figure 2]

**Description**

**Technical Field**

The present invention relates to a light-receiving device for lidar, a lidar, and a meteorological observation lidar.

**Background Art**

A lidar is a device that performs various measurements by emitting laser light toward a measurement space and measuring the time it takes to receive reflection light from the emitted laser light or analyzing a spectrum of scattered light from the laser light.

For example, Patent Literature 1 discloses using a lidar as observation means for measuring temperature distribution, water vapor concentration, and wind direction and wind speed in the atmosphere. Patent Literature 1 describes a meteorological observation lidar for observing scattered light from laser light, the meteorological observation lidar including a diffraction grating that diffracts rotational Raman-scattered light contained in scattered light, a detector that detects the rotational Raman-scattered light that has been diffracted, and a removal element that exclusively removes elastically scattered light contained in the scattered light.

**Citation List**

**Patent Literature**

Patent Literature 1: WO 2020/075869

**Summary of Invention**

**Technical Problem**

In the process of developing a light-receiving device for lidar, the present inventors found that when an array detector is used to analyze the spectrum of the received light, the amount of light input on each detection channel and the output signal value have a nonlinear relationship (coincidence loss), and that measurement errors may occur due to the occurrence of crosstalk between adjacent channels of the array detector. It was found that with a lidar used to analyze a Raman spectrum in particular, the measurement result is likely to be affected by coincidence loss and crosstalk of this type.

The present invention has been designed in consideration of these problems, and an object thereof is to provide a light-receiving device for lidar, a lidar, and a meteorological observation lidar with which the effects of coincidence loss and crosstalk on a measurement result can be reduced.

**Solution to Problem**

A light-receiving device for lidar according to embodiment of the present invention is a light-receiving device for a lidar, which detects scattered light of laser light, and includes light obtained by dispersing received light to produce wavelength-dispersed light in one axial direction, an optical element that sets a wavelength resolution, with respect to a wavelength dispersion axis direction of light, within the dispersed light, having relatively high intensity to be higher than the wavelength resolution, with respect to the wavelength dispersion axis direction, of light having relatively low intensity, and an array detector that detects the light whose a spectrum has been changed by the optical element.

Coincidence loss and crosstalk have a steadily greater effect on the measurement results as differences in the photon flux density of the light received by the respective channels of the array detector increase. **In** the light-receiving device for lidar described above, the optical element that sets the wavelength resolution of the light which, within the light dispersed by the spectroscopic element, has relatively high intensity to be higher than the wavelength resolution of the light having relatively low intensity is disposed in front of the array detector. **In** the light-receiving device for lidar described above, the optical element relatively increases the intensity of the light having relatively low intensity, within the light dispersed by the spectroscopic element, and relatively reduces the intensity of the light having relatively high intensity. Hence, with the light-receiving device for lidar described above, intensity differences in the spectrum of the light changed by the optical element become smaller than in the spectrum of the light dispersed by the spectroscopic element, whereby differences in the photon flux density of the light received by the respective channels of the array detector become comparatively small, and as a result, the effects of coincidence loss and crosstalk on the measurement result can be reduced.

The dispersed light may have a spectral shape in which the intensity near a center wavelength is relatively high and the intensity near the spectrum ends is relatively low. In this aspect, the optical element sets the wavelength resolution, with respect to the wavelength dispersion axis direction of the dispersed light, of light $L_c$ having wavelengths near the center wavelength of the spectrum, within the dispersed light, to be higher than the wavelength resolution, with respect to the wavelength dispersion axis direction of the dispersed light, of light $L_e$ having wavelengths near the spectrum ends of the spectrum. According to this aspect, the spectrum of the received light can favorably be analyzed in a case where a rotational Raman spectrum or a vibrational Raman spectrum, for example, is received.

Furthermore, in this aspect, the optical element preferably increases the wavelength resolution, with respect to the wavelength dispersion axis direction of the dispersed light, of the light $L_c$ and reduces the wavelength resolution, with respect to the wavelength dispersion axis direction of the dispersed light, of the light $L_e$. According to this aspect, the intensity of the light having relatively high intensity decreases, and the intensity of the light having relatively low intensity increases, and therefore the effects of coincidence loss and crosstalk on the measurement results can be further reduced.

In any of the aspects described above, the optical element is preferably either an aspheric lens or a combination of an aspheric lens and one or more other optical elements. According to this aspect, the optical system can be reduced in size in comparison with an aspect using an aspherical mirror, for example.

In the above aspect, in which the optical element includes an aspheric lens, when a propagation direction of the dispersed light is defined as a z-axis direction and the wavelength dispersion axis direction of the dispersed light is defined as a y-axis direction, the aspheric lens is preferably arranged so that the optical axis is substantially aligned with an optical path of the light $L_c$ as seen from an x-axis direction orthogonal to the z-axis and the y-axis, and the aspheric lens sets the wavelength resolution, in the y-axis direction, of light passing through the vicinity of the optical axis to be higher than the wavelength resolution, in the y-axis direction, of light passing through regions farther from the optical axis in the y-axis direction. According to this aspect, an aspheric lens that is comparatively easy to manufacture can be used.

In an aspect using an aspheric lens disposed as described above, the aspheric lens is preferably a cylindrical lens that extends in the x-axis direction. According to this aspect, the wavelength resolution of the dispersed light with respect to the x-axis direction is not converted nonlinearly.

In any of the aspects described above, the spectroscopic element preferably includes a diffraction grating.

In any of the aspects described above, the spectroscopic element is preferably a relay lens disposed directly in front of the array detector. According to this aspect, the light-receiving device for lidar of this embodiment can be realized by attaching a spectroscopic element constituted by this relay lens even to an existing light-receiving device for lidar including an existing spectroscopic element. Moreover, the performance of the light-receiving device for lidar as a whole can easily be controlled by adjusting the optical system of the relay lens with either no or minimal adjustment of the internal optical system of the light-receiving device.

The light-receiving device for lidar described above can be used favorably for meteorological observation. The light-receiving device for lidar is particularly suited to applications such as analyzing a rotational Raman spectrum or a vibrational Raman spectrum.

A lidar according to an embodiment of the present invention includes an irradiation device that emits laser light, and the light-receiving device for lidar described above. Since this lidar includes the light-receiving device for lidar described above, the effects of coincidence loss and crosstalk on the measurement result can be reduced. When the light-receiving device for a meteorological observation lidar described above is used as the light-receiving device for lidar, the lidar can be used as a meteorological observation lidar.

The laser light emitted by the irradiation device of the meteorological observation lidar described above is preferably laser light in a UV region. According to this aspect, Raman spectra of nitrogen molecules, oxygen molecules, water molecules, and so on can be favorably obtained. Furthermore, the meteorological observation lidar described above is preferably used for air temperature measurement.

## Advantageous Effect of Invention

According to the present invention, it is possible to provide a light-receiving device for a lidar, a lidar, and a meteorological observation lidar that reduce the effects of coincidence loss and crosstalk on measurement results.

## Brief Description of Drawings

[Figure 1] Figure 1 is a view showing a configuration of a lidar according to an embodiment.

[Figure 2] Figure 2 is a view showing a configuration of a light-receiving device for lidar according to a first embodiment.

[Figure 3] Figure 3 is (A) a perspective view and (B) a plan view of an example arrangement of an aspheric lens in the light-receiving device for lidar.

[Figure 4] Figure 4 is a schematic view showing a configuration of a light-receiving device for lidar according to a second embodiment.

[Figure 5A] Figure 5A is a view showing a configuration of a light-receiving device for lidar according to a third embodiment.

[Figure 5B] Figure 5B is a view showing another configuration of the light-receiving device for lidar according to the third embodiment.

[Figure 6] Figure 6 is a view showing a configuration of a meteorological observation lidar having a ground-based calibration device.

[Figure 7] Figure 7 is (A) a schematic view and (B) a plan view of a model in a simulation using OpticStudio, and (C) a front view of an array detector.

[Figure 8] Figure 8 is (A) a schematic view of an optical system used in an experiment for confirming a light-focusing state of the light-receiving device for lidar, (B) an enlarged view thereof, and (C) a view showing results thereof.

[Figure 9] Figure 9 shows (A) settings and (B) results of a simulation in which cylindrical lenses having concave and convex surfaces have been introduced.

[Figure 10] Figure 10 is (A) a schematic view of an optical system used in an experiment for confirming the light-focusing state of the light-receiving device for lidar when cylindrical lenses having concave and convex surfaces are introduced, and (B) a view showing results thereof.

[Figure 11] Figure 11 shows (A) settings and (B) results of a simulation in which an aspheric lens has been introduced.

[Figure 12] Figure 12 is (A) a plan view and (B) a side view of a model in a simulation performed in a case where an optical element for changing the wavelength resolution is a relay lens, and (C) is a view showing a simulation result indicating a distribution of change in the wavelength resolution before and after light becomes incident on the optical element.

[Figure 13] Figure 13 shows wavelengths of respective channels of an array detector set in a simulation of air temperature measurement accuracy.

[Figure 14] Figure 14 shows signal intensity distributions obtained with respective detector settings.

[Figure 15] Figure 15 shows results of air temperature estimation when signal intensity correction is not performed, straight lines constituted by dots respectively indicating results of cases 1, 2, 3, 4, and 5 in order from the top.

[Figure 16] Figure 16 shows a result of the estimation accuracy when air temperatures of 250-320 K are envisaged in relation to case 5.

[Figure 17] Figure 17 shows the air temperature estimation accuracy after performing signal intensity correction, straight lines constituted by dots on a left diagram (T = 273) respectively indicating results of cases 1, 2, 3, 4, 5, and 6 in order from the top, and straight lines constituted by dots on a right diagram (T = 300) respectively indicating results of cases 1, 2, 3, 4, 6, and 5 in order from the top at a dot where the x-axis is at 100 MHz.

[Figure 18] Figure 18 shows bias after performing signal intensity correction, straight lines constituted by dots respectively indicating results of cases 1, 2, 3, 4, 5, and 6 in order from the top.

## Description of Embodiments

An embodiment (referred to hereinafter as "this embodiment") of the present invention will be described in detail below with reference to the figures. However, the present invention is not limited to this embodiment and can be subjected to various amendments within a scope that does not depart from the spirit thereof. In the following description of the figures, identical or similar parts are represented with identical or similar reference symbols appended thereto. The figures are schematic and do not always match actual dimensions, ratios, and so on. The figures may also include parts where dimensional relationships and ratios differ between the figures.

[Lidar]

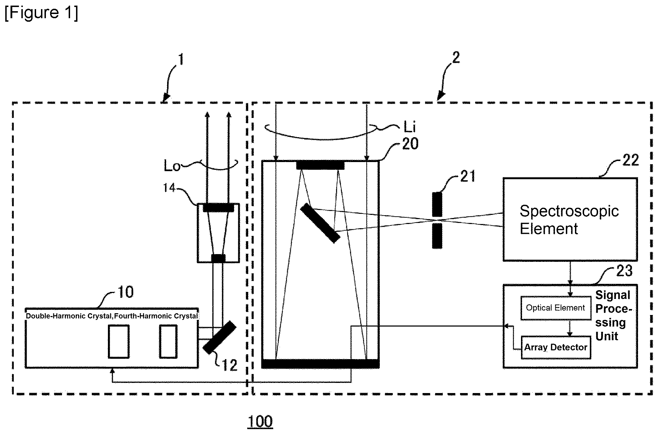

Figure 1 shows a basic configuration of a lidar according to this embodiment. As shown in Figure 1, a lidar 100 of this embodiment basically includes an irradiation device 1 and a light-receiving device 2.

As shown in Figure 1, the irradiation device 1 mainly includes a laser device 10, a mirror 12, and a beam expander 14. The irradiation device 1 functions as light emitting means for emitting laser light of a specific wavelength.

The laser device 10 is light emitting means that emits a laser light beam of a prescribed wavelength. The wavelength of the laser light is to be selected as appropriate by combining wavelength conversion elements such as a double-harmonic crystal and a fourth-harmonic crystal, for example, in accordance with the application of the lidar. The mirror 12 is an optical element that reflects the direction of the output laser light beam in the light emission direction of the irradiation device. The beam expander 14 is an optical element that enlarges the beam diameter of the laser light beam, which enters the beam expander 14 as a parallel beam, and outputs the expanded beam as emission light Lo.

The light-receiving device 2 includes a light-receiving unit 20, a diaphragm 21, a spectroscopic element 22, and a signal processing unit 23. The emission light $L_o$ emitted by the irradiation device 1 described above is reflected and/or scattered by obstacles and atmospheric components such that a part thereof becomes incident on the lidar 100 as incident light Li. The light-receiving device 2 has functions for detecting and analyzing the incident light Li.

The light-receiving unit 20 receives the incident light Li and converges the received light into luminous flux. The diaphragm 21 removes unnecessary light components by allowing the converged incident light Li to pass through. The spectroscopic element 22 disperses the received light so that the light is wavelength-dispersed in one axial direction. As long as the spectroscopic element 22 has this function, there are no particular limitations thereon, and for example, a diffraction grating or a prism may be used.

The signal processing unit 23 analyzes the light dispersed by the spectroscopic element 22 by, for example, analyzing the spectrum of the received light. The signal processing unit 23 analyzes the spectrum of the received light, and determines the composition and temperature of the upper atmosphere on the basis of the intensity of scattered light of a plurality of wavelengths.

The signal processing unit 23 includes an optical element, to be described below, and an array detector. The optical element performs a conversion to be described below on the light dispersed by the spectroscopic element 22. The light that passes through the optical element is detected by the array detector. The array detector includes a plurality of detection units, and each detection unit (channel) detects photons independently. In the array detector, the detection units are to be arranged at equals widths and equal intervals. The width of each detection unit is to be no less than 0.5 mm and no more than 2.0 mm, for example. In this type of array detector, when light dispersed at equal intervals, for example, is detected, the detection units can detect light of each of the wavelengths of the dispersed light, and by associating the channels respectively with the wavelengths, the spectrum of the dispersed light can be analyzed. A photomultiplier tube (PMT) array, an avalanche photodiode array, or an electron multiplying charge-coupled device (EMCCD), for example, can be used as the array detector.

Results of the processing and analysis performed by the signal processing unit 23 may be displayed on a display unit further provided in the lidar 100, transferred wirelessly or by wire to an information processing device connected to the lidar 100, and fed back to the irradiation device 1.

[Light-receiving device for lidar]

The configuration of the light-receiving device 2 will now be described in more detail. The light-receiving device 2 is the light-receiving device for a lidar of this embodiment, and includes a spectroscopic element that disperses received light so that the light is wavelength-dispersed in one axial direction, an optical element that sets a wavelength resolution, with respect to a wavelength dispersion axis direction of the dispersed light, of light having relatively high intensity, within the dispersed light, to be higher than the wavelength resolution, with respect to the wavelength dispersion axis direction of the dispersed light, of light having relatively low intensity, and an array detector that detects the light whose the spectrum has been changed by the optical element. The light whose the spectrum has been changed by the optical element may be light that has passed through the optical element or light reflected from the optical element.

The optical element may increase the wavelength resolution of the light having relatively high intensity and reduce the wavelength resolution of the light having relatively low intensity; or increase the wavelength resolutions of both the light having relatively high intensity and the light having relatively low intensity (in this case, the wavelength resolution of the light having relatively high intensity is set to be higher); or reduce the wavelength resolutions of both the light having relatively high intensity and the light having relatively low intensity (in this case, the wavelength resolution of the light having relatively low intensity is set to be lower). In this context, "wavelength resolution" (spectral resolution) may be referred to as "wavelength resolving power". The optical element is preferably either an aspheric lens or a combination of an aspheric lens and one or more other optical elements. For example, the optical element may be a combination of an optical element having negative power, such as a concave lens, and an aspheric lens, or a combination of one or a plurality of aspheric lenses and one or a plurality of spherical lenses. When the optical element is a reflective optical element such as a mirror, a material or a coating having a high reflectance within the spectral range of the measurement subject is preferable. When the optical element is a transmissive optical element such as a lens, an anti-reflection film is preferably applied to both surfaces of the optical element.

(First embodiment)

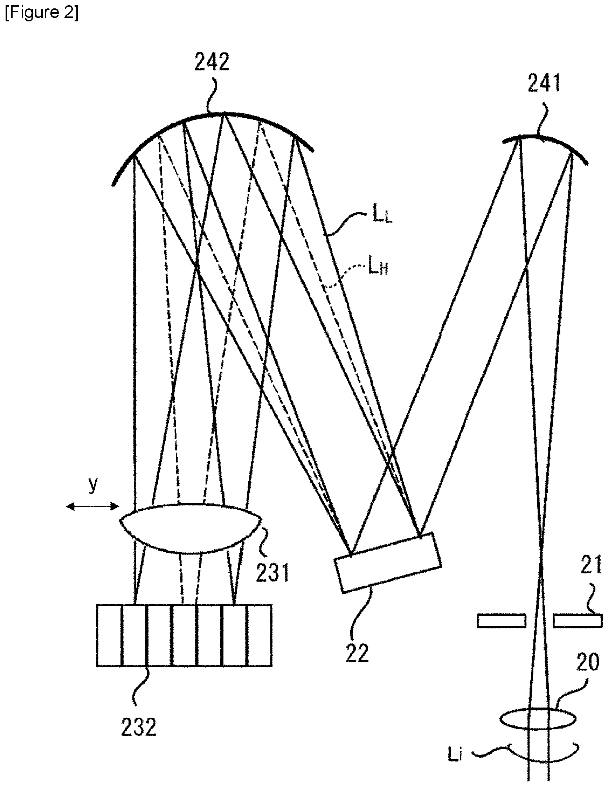

Figure 2 shows a light-receiving device for lidar of a first embodiment. As shown in Figure 2, the light-receiving device for lidar of the first embodiment includes the light-receiving unit 20, the diaphragm 21, the spectroscopic element 22, an aspheric lens 231, an array detector 232, and concave mirrors 241 and 242. Light entering through the diaphragm 21 is led to the spectroscopic element 22 by the concave mirror 241. The spectroscopic element 22 is a diffraction grating, for example. In Figure 2, the spectroscopic element 22 disperses the light incident thereon so that the light is wavelength-dispersed in one axial direction within a plane.

The light dispersed by the spectroscopic element 22 is led to the aspheric lens 231 by the concave mirror 242 and passes through the aspheric lens 231, whereupon a spectroscopic spectrum of the incident light Li is projected onto the array detector 232. The light incident on the aspheric lens 231 and the light emitted onto the array detector 232 are wavelength-dispersed in a y-axis direction in Figure 2. The aspheric lens 231 sets the wavelength resolution, with respect to the wavelength dispersion direction (the y-axis direction in Figure 2) of the dispersed light, of light $L_H$ having relatively high intensity, within the light dispersed by the spectroscopic element 22, to be higher than the wavelength resolution, with respect to the y-axis direction, of light $L_L$ having relatively low intensity. **In** a conventional light-receiving device for lidar, meanwhile, the light dispersed by the spectroscopic element 22 is led to the array detector 232 by the concave mirror 242 without being passed through an aspheric lens, whereupon the spectroscopic spectrum of the incident light Li is projected onto the array detector 232.

By disposing the aspheric lens 231 between the spectroscopic element 22 and the optical path of the array detector 232, differences in the photon flux density of the light received by the respective channels of the array detector 232 in the light-receiving device for lidar of the first embodiment become smaller. For example, when the aspheric lens 231 is not disposed, a situation in which light of a wavelength range $\Delta\lambda$ becomes incident on n channels of the array detector in both the light $L_H$ and the light $L_L$ (more specifically, in the light $L_H$, light having wavelengths of $\lambda_H \pm \Delta\lambda/2$, where $\lambda_H$ is the center wavelength, becomes incident on the n channels, and in the light $L_L$, light having wavelengths of $\lambda_L \pm \Delta\lambda/2$, where $\lambda_L$ is the center wavelength, becomes incident on the n channels) may be envisaged. In this case, by disposing the aspheric lens 231 in front of the array detector 232, assuming that in the light $L_H$, light having wavelengths within the range of $\Delta\lambda$ becomes incident on $n_H$ channels and in the light $L_L$, light having wavelengths within the range of $\Delta\lambda$ becomes incident on $n_L$ channels, setting the wavelength resolution of the light $L_H$ to be higher than the wavelength resolution of the light $L_L$ means that $n_H$ is larger than $n_L$. When the aspheric lens 231 is not disposed, the light $L_H$ and the light $L_L$ are both detected by the same number of channels (n), whereas when the aspheric lens 231 is disposed, since $n_H$ is larger than $n_L$, the light $L_H$ is detected by more channels than the light $L_L$. Thus, by passing the dispersed light through the aspheric lens 231, the difference in photon flux density between the light $L_H$ and the light $L_L$ decreases, leading to a reduction in the differences in the photon flux density of the light received by the respective channels of the array detector 232. As a result, differences in proportions of coincidence loss and crosstalk among the signal values of the respective channels also decrease, making it possible to provide a light-receiving device for lidar with which the effects of coincidence loss and crosstalk on the measurement result can be reduced.

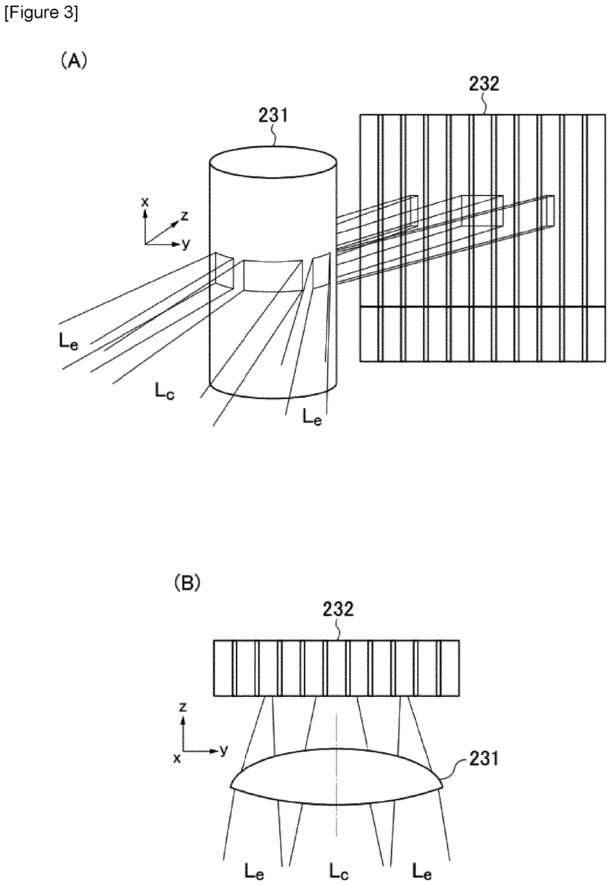

Figure 3 shows examples of methods for arranging the aspheric lens 231. In Figure 3, the z-axis corresponds to the propagation direction of the light that is dispersed by the spectroscopic element and becomes incident on the array detector 232, and the y-axis corresponds to a direction matching the wavelength dispersion axis direction of the dispersed light. In Figure 3, the aspheric lens 231 is a cylindrical lens extending in an x-axis direction orthogonal to the y-axis and the z-axis defined as described above. The aspheric lens 231 is a convex lens having at least one aspherical surface when seen from the x-axis direction (in plan view in Figure 3). The aspheric lens 231 is arranged such that the optical axis (shown by a dot-dash line in Figure 3(B)) and a detection surface of the array detector 232 are substantially perpendicular, and by adjusting the angles and positions of the spectroscopic element 22 and the concave mirrors 241 and 242 in Figure 2, the dispersed light is emitted so as to be substantially parallel to the optical axis of the aspheric lens 231. Note that in this specification, when the word "substantially" is used in relation to an angle, such as substantially perpendicular and substantially parallel, this means that an angle range for satisfying the described condition includes a range of $\pm 10°$, preferably $\pm 5°$, and more preferably $\pm 1°$.

In the first embodiment, the light obtained by dispersing the incident light Li has a spectral shape in which the intensity near the center wavelength is relatively high and the intensity near the spectrum ends is relatively low. Raman-scattered light such as rotational Raman-scattered light or vibrational Raman-scattered light, for example, may be used as the incident light Li having this spectrum. Note that the spectral shape of the dispersed light does not necessarily have to be set such that the peak wavelength and the center wavelength match, and for example, in a spectrum having a center wavelength $\lambda_x$ and a spectral width $\Delta\lambda_x$ (the difference between the maximum wavelength and the minimum wavelength included in the dispersed light), a spectrum in which the intensity of the light having wavelengths within a range of $\lambda_x \pm \Delta\lambda_x/4$ occupies more than 50%, preferably 60% or more, and more preferably 65% or more of the cumulative intensity of the entire spectrum, a spectrum in which the peak wavelength is within a range of $\lambda_x \pm \Delta\lambda_x/4$, or the like may be used. The light that passes through the aspheric lens 231 may be Raman-scattered light such as rotational Raman-scattered light or vibrational Raman-scattered light, or light obtained by entirely removing elastically scattered light components from Raman-scattered light.

As shown in Figure 3(B), in the first embodiment, the angles and positions of the spectroscopic element 22 and the concave mirrors 241 and 242 are adjusted so that light $L_c$ having wavelengths near the center wavelength of the spectrum of the light incident on the aspheric lens 231 passes through the vicinity of the center (the optical axis) of the aspheric lens 231 and light $L_e$ having wavelengths near the spectrum ends of the spectrum passes through the vicinity of end portions of the aspheric lens 231. In other words, the aspheric lens 231 is arranged such that the optical axis is substantially aligned with the optical path of the light $L_c$ when seen from the x-axis direction. Wavelengths near the center wavelength may be, for example, wavelengths in a range of center wavelength $\pm$ (full width at half maximum) / 2 or wavelengths in a range of center wavelength $\pm$ (spectrum width) / 2.

Furthermore, in Figure 3(B), the aspheric lens 231 is a lens that makes the wavelength resolution, in the y-axis direction, of the light passing through the vicinity of the optical axis higher than the wavelength resolution, in the y-axis direction, of the light passing through regions farther from the optical axis in the y-axis direction. Since the light $L_c$ having wavelengths near the center wavelength passes through the vicinity of the optical axis and the $L_e$ having wavelengths near the spectrum ends passes through the parts (near the end portions of the aspheric lens 231) distanced from the optical axis in the y-axis direction, the aspheric lens 231 makes the wavelength resolution of the light $L_c$ in the y-axis direction relatively higher than that of the light $L_e$. Here, the light $L_c$ has a higher intensity than the light $L_e$, and therefore, with a configuration such as that shown in Figure 3, the wavelength resolution, with respect to the wavelength dispersion axis direction, of the dispersed light having relatively high intensity can be set to be higher than the wavelength resolution, with respect to the wavelength dispersion axis direction, of the dispersed light having relatively low intensity.

An aspheric lens that makes the wavelength resolution, in the y-axis direction, of the light that passes through the vicinity of the optical axis higher than the wavelength resolution, in the y-axis direction, of the light that passes through the regions farther from the optical axis in the y-axis direction can be designed by appropriately selecting the two surfaces of the lens as seen from the x-axis direction, for example. The aspheric lens may be designed by adjusting a coefficient $\alpha$, a conic coefficient k, and a curvature radius R of an aspheric lens function shown in equation (1), for example. Here, the z-axis and the y-axis are oriented as illustrated in Figure 3, and i is an integer of 1-7.
[Math. 1]

$$Z_y = \frac{\frac{y^2}{R}}{1+\sqrt{1-(1+k)\left(\frac{y}{R}\right)^2}} + \sum_i \alpha_i y^{2i} \quad (1)$$

A case in which, for example, an array detector-side surface of the aspheric lens is a function of k = 0, i = 1 and the other surface is a function of R = ∞, k = 0, i = 1 to 3 may be cited as an example of the aspheric lens function. Further, the light-receiving device for lidar may include a plurality of aspheric lenses, and instead of using an aspheric lens, the concave mirror 242 may be used as an aspheric mirror. An aspect combining an aspheric lens and an aspheric mirror may also be employed. The aspheric lens 231 may be a lens in which distortion in the y-axis direction has been increased in comparison with a spherical lens.

(Second embodiment)

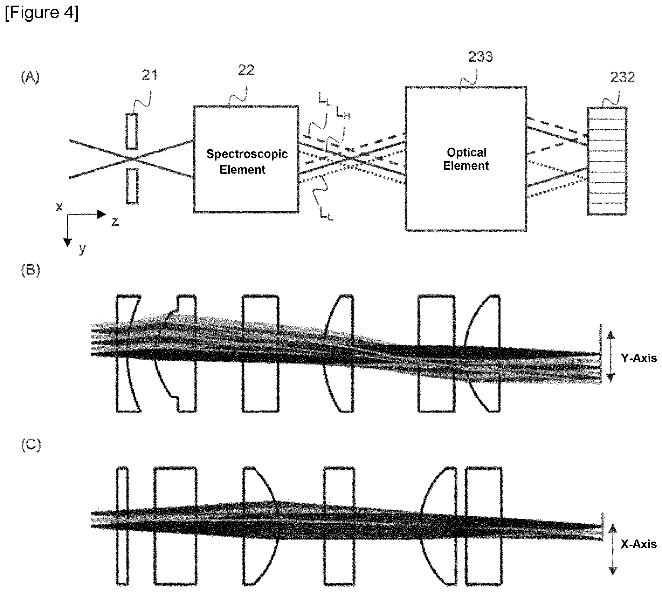

Figure 4 is a schematic view showing a configuration of a light-receiving device for lidar of a second embodiment. The first and second embodiments differ in that in the light-receiving device for lidar of the first embodiment, shown in Figure 2, the optical element that changes the wavelength resolution is an aspheric lens disposed in front of the array detector, whereas in the light-receiving device for lidar of the second embodiment, shown in Figure 4, the optical element that changes the wavelength resolution is a relay lens disposed directly in front of the array detector.

More specifically, in the first embodiment shown in Figure 2, the aspheric lens 231 is disposed in front of an imaging position of the spectroscopic element 22, formed by the concave mirror 242, whereas in the second embodiment shown in Figure 4(A), an optical element 233 is disposed in the form of a relay lens to the rear of the imaging position of the spectroscopic element 22. By disposing the optical element 233 in the form of a relay lens to the rear of the imaging position of the spectroscopic element in this manner, the performance of the light-receiving device for lidar as a whole can easily be adjusted by adjusting the optical system of the optical element 233, with either no or minimal adjustment of the optical system of the spectroscopic element 22. In other words, the second embodiment can be realized comparatively easily by installing the optical element 233 in the form of a relay lens in an existing light-receiving device for lidar, and providing the array detector directly to the rear thereof.

The light-receiving device for lidar of the second embodiment, shown in Figure 4(A), includes the diaphragm 21, the spectroscopic element 22, the optical element 233, and the array detector 232. Although omitted from Figure 4, the light-receiving device for lidar of the second embodiment may also include the light-receiving unit 20 and other optical elements, similarly to the first embodiment. Optical elements described in the present specification, such as mirrors (planar mirrors and concave mirrors), lenses, and so on, for example, may be employed as the other optical elements.

In Figure 4(A), the optical element 233, similarly to the first embodiment, makes the wavelength resolution, with respect to the wavelength dispersion direction (the y-axis direction in Figure 2) of the dispersed light, of the light $L_H$ having relatively high intensity higher than the wavelength resolution, with respect to the y-axis direction, of the light $L_L$ having relatively low intensity.

Figures 4(B) and (C) are, respectively, a plan view and a side view showing an example configuration of the optical element 233 in Figure 4(A). As shown in Figures 4(B) and (C), the optical element 233 is to be constituted by a plurality of lenses. One or more of the plurality of lenses is preferably an aspheric lens. The plurality of lenses may also include a lens having positive refractive power and/or a lens having negative refractive power.

From the viewpoint of facilitating design and manufacture, the optical element 233 is preferably constituted by a plurality of cylindrical lenses. The cylindrical lenses may extend in the y-axis direction (the wavelength dispersion direction of the dispersed light) in Figure 4, or may extend in the x-axis direction (a direction orthogonal to the z-axis direction, which is the propagation direction of the light, and the y-axis direction). The optical element 233 preferably includes a cylindrical lens that extends in the y-axis direction and a cylindrical lens that extends in the x-axis direction, and more preferably includes a cylindrical lens that has an aspherical surface and extends in the x-axis direction, a spherical cylindrical lens that extends in the x-axis direction, and a spherical cylindrical lens that extends in the y-axis direction. The cylindrical lens that has an aspherical surface and extends in the x-axis direction is to be arranged furthest frontward (in other words, optically closest to the spectroscopic element).

In the second embodiment shown in Figure 4, the distance (a physical distance along the optical path) between the spectroscopic element 22 and the array detector 232 is to be longer than the distance between the spectroscopic element 22 and the array detector 232 in the first embodiment. Further, in the second embodiment shown in Figure 4, the array detector 232 is to be disposed to the rear of the original imaging position of the spectroscopic element 22.

(Third embodiment)

The light-receiving device for lidar according to this embodiment may further include, in addition to the configurations described above, a configuration for entirely removing specific wavelengths from the dispersed light. An interference filter such as a notch filter or a bandpass filter, a spatial filter, a slit, or the like, for example, may be used as this configuration.

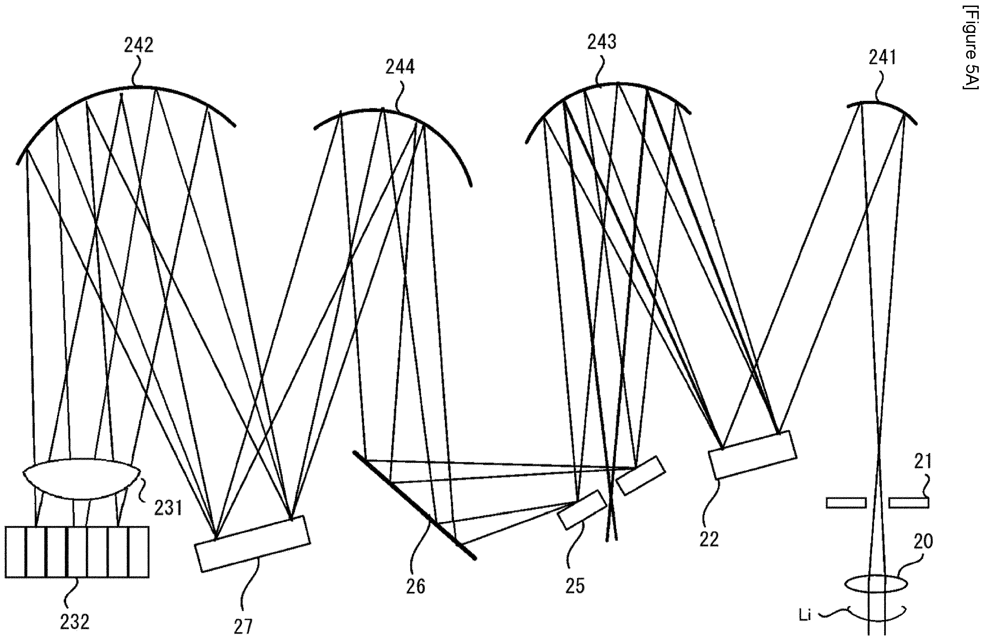

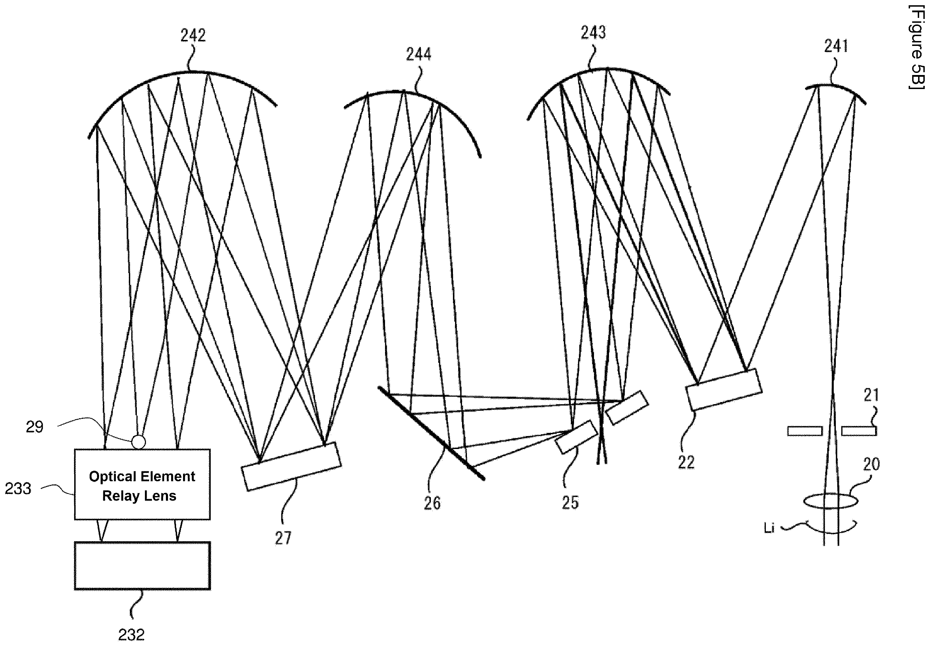

An aspect in which a slit is provided as a configuration for entirely removing specific wavelengths from the dispersed light will be described below as a third embodiment with reference to Figures 5A and 5B. In the third embodiment, the same reference symbols have been appended to configurations that are identical or similar to the first embodiment, and duplicate description thereof has been omitted.

The light-receiving device for lidar of the third embodiment shown in Figure 5A differs from the light-receiving device for lidar of the first embodiment in further including a slit 25, a mirror 26, an additional spectroscopic element 27, and concave mirrors 243 and 244.

The slit 25 allows only a part of the light to pass through and reflects the rest of the light, thereby removing transmitted light. The wavelength of the light to be removed can be selected as appropriate by adjusting the installation position of the slit 25. As long as the slit 25 is an element that can remove light of at least some wavelengths, there are no particular limitations thereon, and the slit 25 may be an optical element obtained by appropriately combining, for example, an interference filter and/or a spatial filter with a mirror.

The spectroscopic element 27 further disperses the light dispersed by the spectroscopic element 22. The spectroscopic element 27 is a diffraction grating, for example. By providing two spectroscopic elements in this manner, the light-receiving device for lidar of the third embodiment can perform highly precise spectral analysis.

The light-receiving device for lidar of the third embodiment shown in Figure 5B differs from the light-receiving device for lidar of the third embodiment shown in Figure 5A in that the optical element 233 constituted by a relay lens is provided in place of the aspheric lens 231, and a removal element 29 is additionally provided in front of the optical element 233. As long as the removal element 29 is an element for entirely removing specific wavelengths from the dispersed light, there are no particular limitations thereon, and the removal element 29 may be an interference filter, a spatial filter, or a combination thereof, for example. The configuration, preferred forms, and so on of the optical element 233 are similar to those described in the second embodiment.

In the light-receiving device for lidar of the third embodiment shown in Figure 5B, the slit 25 and the removal element 29 are provided as a first configuration and a second configuration, respectively, for entirely removing specific wavelengths from the dispersed light. In this aspect, the slit 25 and/or the removal element 29 may be omitted, and an element (for example, an optical element obtained by appropriately combining an interference filter and/or a spatial filter with a mirror) that can remove light of at least some wavelengths may be used in place of the slit 25.

When the optical element 233 constituted by a relay lens is used as the optical element that changes the spectrum in this manner, a focal point exists between the spectroscopic element 27 and the optical element 233, and therefore the removal element 29 for removing light of some wavelengths can be provided near the focal point. With the configuration shown in Figure 5B, advantages are obtained in that the efficiency with which light of specific wavelengths is removed by the removal element 29 can be increased, and light of specific wavelengths can be removed at a higher wavelength resolution than when only the slit 25 is used (the accuracy of the wavelengths to be removed can be increased).

[Meteorological observation lidar]

The lidar and the light-receiving device for lidar described above can be used favorably as a meteorological observation lidar, and specifically a meteorological observation lidar for measuring air temperature.

As shown in Figure 1, in a meteorological observation lidar, the irradiation device 1 emits laser light into the atmosphere. Further, the light-receiving device 2 receives light scattered by atmospheric elements, for example water vapor ($H_2O$) molecules, nitrogen ($N_2$) molecules, and oxygen ($O_2$) molecules.

The laser device 10 may emit laser light in the UV region, for example. The laser device 10 may, for example, emit YAG laser wavelengths of 266 nm, 355 nm, and 532 nm or excimer laser wavelengths of 248 nm, 308 nm, and 351 nm. By using laser light in the UV region, the intensity of background light caused by sunlight during the day can be reduced.

The irradiation device 1 may include precision air conditioning equipment that keeps the dust level in a space that includes all or part of the optical path of the laser light at or below a certain level. By providing precision air conditioning equipment, damage to the optical components can be suppressed, enabling an improvement in durability. The irradiation device 1 may also include a temperature regulation mechanism that keeps temperature variation in the optical components and the surrounding space at or below a certain level. Likewise by preventing rapid temperature variation in the optical system, damage to the optical components can be suppressed, enabling an improvement in durability. A laser damage threshold (the laser light intensity at which damage begins) of an optical element decreases as the wavelength shortens, generally leading to an increase in damage to the optical element. It is particularly difficult to operate a meteorological observation lidar with stability using laser with wavelengths in the UVC region, but by providing the configuration described above, stable operations in this region are realized.

The light-receiving device 2 may receive Raman-scattered light scattered by atmospheric components, for example water vapor ($H_2O$) molecules, nitrogen ($N_2$) molecules, and oxygen ($O_2$) molecules. The Raman-scattered light may be rotational Raman-scattered light or vibrational Raman-scattered light.

The light-receiving unit 20 may be a telescope. The aperture of the telescope is to be, for example, no less than 10 cm and no more than 60 cm, or no less than 10 cm and no more than 40 cm.

The light-receiving device 2 preferably further includes a configuration for entirely removing specific wavelengths, similarly to the light-receiving device for lidar of the third embodiment. According to this aspect, it is possible to remove only elastically scattered component of the received Raman-scattered light, and as a result, components other than the elastically scattered component can be analyzed with a high degree of accuracy.

A meteorological observation lidar for detecting Raman-scattered light (referred to hereinafter as a "Raman lidar") estimates the air temperature using the temperature dependence of rotational Raman scattering or vibrational Raman scattering by nitrogen molecules and oxygen molecules. A multi-wavelength method in which the shapes of both the Stokes component and the anti-Stokes component of the Raman spectrum are captured simultaneously by the spectroscopic element and the array detector, as described above, can be employed to detect the Raman scattering spectrum. With this method, high robustness against wavelength deviation is achieved, and since the measured wavelengths can be adjusted by changing the angle of the diffraction grating, an advantage is obtained in that advanced optical system installation technology is not required.

**In** the Raman lidar, when estimating the air temperature from an obtained Raman scattering signal, it is necessary to perform calibration using a measurement method that is independent of the Raman lidar, for example a radiosonde or the like. Meanwhile, in the array detector, as noted above, the measurement result is easily affected by coincidence loss and crosstalk. In a rotational Raman spectrum in particular, there are a plurality of locations where the intensity ratio of adjacent channels differs by one order of magnitude or more. In a Raman lidar, the effect of crosstalk in particular is significant in channels with weak signals, and this leads to a reduction in the air temperature estimation accuracy. Hence, conventionally, calibration values are set not only for the air temperature but also for each measured signal intensity (signal intensity correction), and the air temperature is determined using a calibration value obtained by linearly interpolating these values.

Furthermore, in calibration by means of comparison with a radiosonde, the atmosphere and the measurement distance have an effect, leading to problems such as an increase in the period required for calibration and an increase in the number of radiosonde observations. In response to these problems, a ground-based calibration device that is annexed to a Raman lidar and is capable of obtaining a rotational Raman spectrum using only the air temperature as a function has been proposed (Yoichiro Fujita, Masanori Yabuki, Toshikazu Hasegawa, Eiji Takeuchi: Ground-based calibration of rotational Raman lidar for profiling atmospheric temperature, 2020 AGU fall meeting, 2020). In this type of ground-based calibration device, a device for precisely regulating the temperature is installed in a small space on the axis of the laser prior to emission into the atmosphere, and a Raman spectrum is determined for each air temperature from side scattering therefrom.

The present inventors discovered that in a meteorological observation lidar including a ground-based calibration device such as that described above, the accuracy of the calibration is easily affected by coincidence loss and crosstalk in the array detector. The inventors also discovered that by using the light-receiving device for lidar of this embodiment as a light-receiving device, the effects of coincidence loss and crosstalk on the measurement result can be reduced, making it possible to provide a meteorological observation lidar in which highly accurate calibration is unnecessary.

Accordingly, the meteorological observation lidar of this embodiment may further include a ground-based calibration device. The ground-based calibration device is a device that is installed on the optical path of the laser light before the light is emitted into the atmosphere from the laser device in order to determine a Raman spectrum, and more specifically a rotational Raman spectrum, for each air temperature from side scattering. The ground-based calibration device may include, for example, a temperature control device for controlling the internal temperature of the calibration device, a thermo-hygrometer for measuring the temperature and humidity inside the calibration device, and a light-receiving unit for receiving scattered light of light generated inside the calibration device.

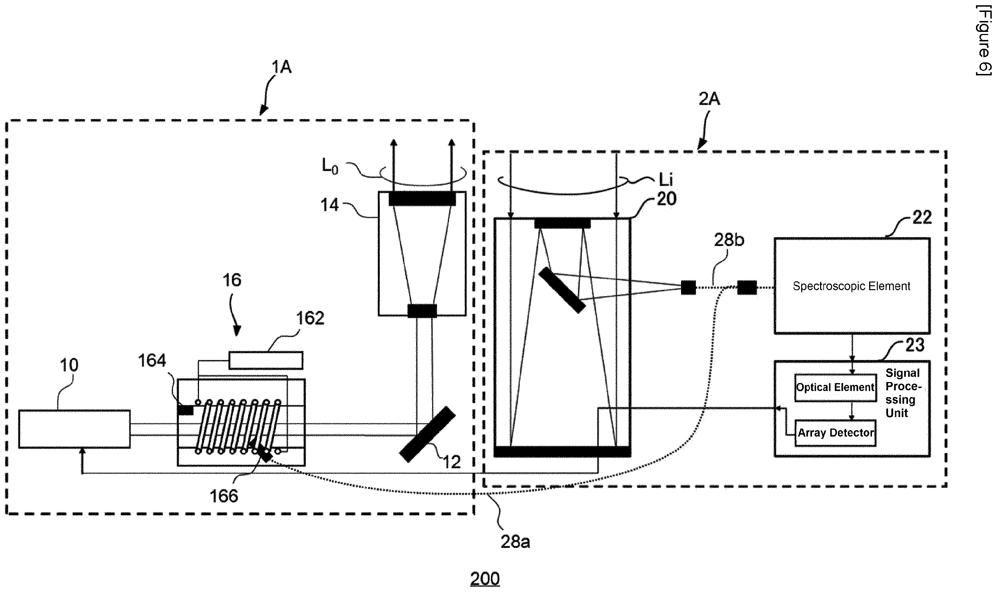

Figure 6 shows an example configuration of a lidar including a ground-based calibration device. As shown in Figure 6, a lidar 200 includes an irradiation device 1A and a light-receiving device 2A. The irradiation device 1A differs from the irradiation device 1 of the lidar 100 shown in Figure 1 in that a ground-based calibration device 16 is provided between the laser device 10 and the mirror 12. The ground-based calibration device 16 includes a temperature control device 162 for controlling the internal temperature of the device, a thermo-hygrometer 164 for measuring the temperature and humidity inside the device, and a light-receiving unit 166 for receiving scattered light of light generated inside the device. Light from the light-receiving unit 166 is led to the light-receiving device 2A by an optical fiber 28a. The temperature control device 162 may include a configuration for circulating an appropriately temperature-controlled heat medium around the optical path of the laser light, for example. The light-receiving device 2A differs from the light-receiving device 2 of the lidar 100 shown in Figure 1 in that the light from the light-receiving unit 20 and the light from the light-receiving unit 166 are led to the spectroscopic element 22 by an optical fiber coupler 28b.

The embodiments described above are for facilitating understanding of the present invention and are not to be interpreted as limiting the present invention. The respective elements of the embodiments as well as the arrangements, materials, conditions, shapes, sizes, and so on thereof are not limited to the provided examples and can be modified as appropriate. Moreover, configurations disclosed in different embodiments may be partially exchanged or combined.

[Additional remarks]

The present invention includes the following embodiments.

[1] A light-receiving device for lidar for that detects scattered laser light, the light-receiving device for lidar including:

a spectroscopic element that disperses received light to produce wavelength-dispersed light in one axial direction;

an optical element that sets a wavelength resolution, with respect to a wavelength dispersion axis direction of the dispersed light, of light having relatively high intensity, within the dispersed light, to be higher than the wavelength resolution, with respect to the wavelength dispersion axis direction of the dispersed light, of light having relatively low intensity; and

an array detector that detects the light whose a spectrum has been changed by the optical element.

[2] The light-receiving device for lidar described in [1],
wherein the dispersed light has a spectral shape in which the intensity near a center wavelength is relatively high and the intensity near spectrum ends is relatively low.

[3] The light-receiving device for lidar described in [1] or [2],
wherein the optical element sets the wavelength resolution, with respect to the wavelength dispersion axis direction of the dispersed light, of light $L_c$ having wavelengths near the center wavelength of the spectrum, within the dispersed light, to be higher than the wavelength resolution, with respect to the wavelength dispersion axis direction of the dispersed light, of light $L_e$ having wavelengths near the spectrum ends of the spectrum.

[4] The light-receiving device for lidar described in any one of [1] to [3],
wherein the optical element increases the wavelength resolution, with respect to the wavelength dispersion axis direction of the dispersed light, of the light $L_c$ and reduces the wavelength resolution, with respect to the wavelength dispersion axis direction of the dispersed light, of the light $L_e$.

[5] The light-receiving device for lidar described in any one of [1] to [4],
wherein the optical element is either an aspheric lens or a combination of an aspheric lens and one or more other optical elements.

[6] The light-receiving device for a lidar described in [5],

wherein, when a propagation direction of the dispersed light is defined as a z-axis direction and the wavelength dispersion axis direction of the dispersed light is defined as a y-axis direction,

the aspheric lens is arranged so that the optical axis is substantially aligned with an optical path of the light $L_c$ as seen from an x-axis direction orthogonal to the z-axis and the y-axis, and

the aspheric lens sets the wavelength resolution, in the y-axis direction, of light passing through the vicinity of the optical axis to be higher than the wavelength resolution, in the y-axis direction, of light passing through regions farther from the optical axis in the y-axis direction.

[7] The light-receiving device for lidar described in [6],
wherein the aspheric lens is a cylindrical lens that extends in the x-axis direction.

[8] The light-receiving device for lidar described in any one of [1] to [7],
wherein the spectroscopic element includes a diffraction grating.

[9] The light-receiving device for lidar described in any one of [1] to [8],
wherein the optical element is a relay lens disposed directly in front of the array detector.

[10] The light-receiving device for lidar described in any one of [1] to [9], for use in meteorological observation.

[11] A lidar including:

an irradiation device that emits laser light; and
the light-receiving device for lidar described in any one of [1] to [10].

[12] A meteorological observation lidar including:

an irradiation device that emits laser light into the atmosphere; and
the light-receiving device for lidar described in any one of [1] to [10].

[13] The meteorological observation lidar described in [12],
wherein the laser light emitted by the irradiation device is laser light in a UV region.

[14] The meteorological observation lidar described in [12] or [13], for use in air temperature measurement.

**Examples**

The present invention will be described specifically below using examples and comparative examples. The present invention is not limited in any way by the following examples.

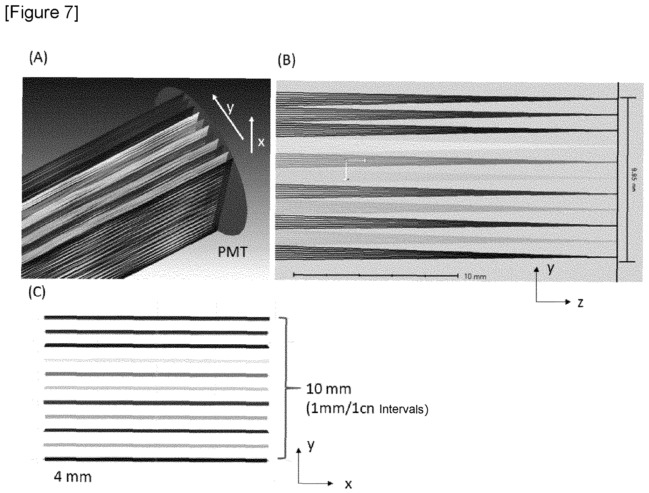

A simulation was performed using OpticStudio and the focus was confirmed using a CCD image sensor. Figure 7 shows a model simulating the focus. The detection region was set at a maximum of 10 mm. Each channel of the array detector was configured to have an effective width of 0.8 mm and a partition of 0.2 mm, and it was therefore assumed that 10 mm corresponds to 10 channels. Note that each spot in the array detector was set at f = 500 mm, and light was focused in the y-axis direction.

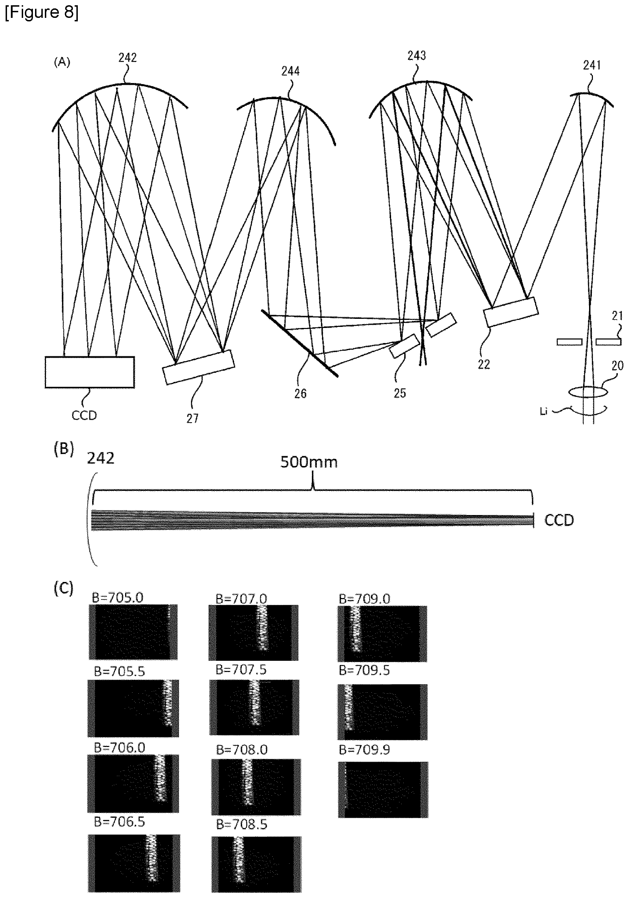

Further, in order to confirm the light-focusing state of an actual light-receiving device for lidar, a laser with a wavelength of 354.7 nm was caused to become incident thereon, whereupon imaging was performed by placing a CCD (imaging area: 6.34 mm (H) $\times$ 4.75 mm (V)) in the detector position. A system including two spectroscopic elements (diffraction gratings of 2400 mm$^{-1}$ and 3600 mm$^{-1}$), shown in Figure 8(A), was used as the light-receiving device for lidar. In Figure 8(A), CCD represents a CCD image sensor, while the other reference symbols are as described above. As shown in Figure 8(B), the distance of the CCD from the concave mirror 242 was set at 500 mm. As a result, as shown in Figure 8(C), a focal point was confirmed by the CCD in each fiber, and it was confirmed that the focus position changed in accordance with the angle settings of the diffraction gratings (the value of B in Figure 8(C)). The line width of each spot was 0.98 mm, and a set wavelength range measurable within an imaging width of 6.34 mm was 4.9 nm.

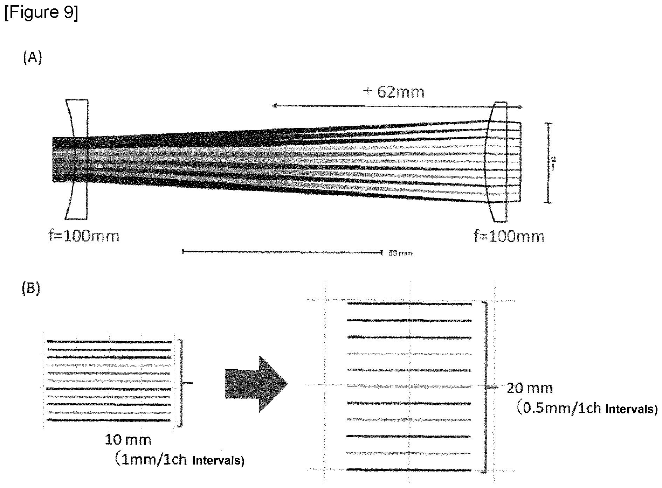

Next, cylindrical lenses having concave and convex surfaces were inserted directly in front of the detector and an attempt was made to widen the focus position of the y-axis. As shown in Figure 9(A), a concave lens and a convex lens of f = 100 mm were arranged within the settings of Figure 7, and the detection position was set 62 mm back from the initial focus position (the setting of Figure 7). As a result, as shown in Figure 9(B), it was possible to widen the interval between the spots to twice that of Figure 7(C), and it was also confirmed that there was no significant effect on the spot radius.

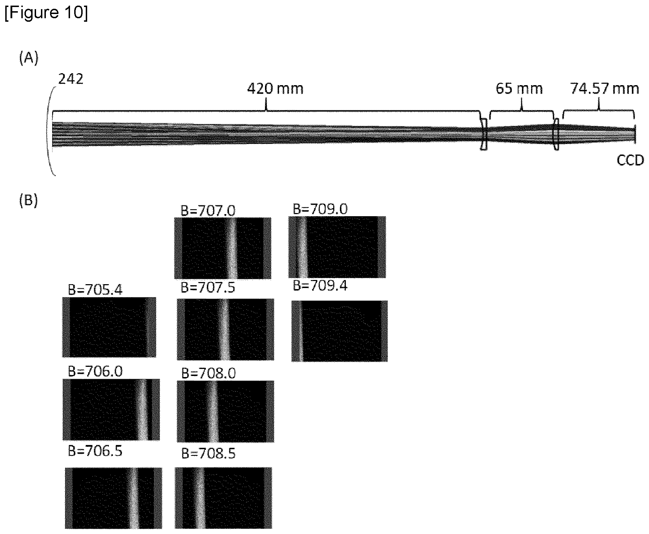

Next, the effects of lens insertion on an actual light-receiving device for lidar were confirmed. Cylindrical lenses having concave and convex surfaces were inserted between the concave mirror 242 and the CCD of Figure 8(A) in the manner shown in Figure 10(A). Figure 10(B) shows imaging results obtained by the CCD. Since the position of the CCD was offset from the focus position in a vertical direction (the x-axis), the focal points for each fiber, as shown in Figure 8C, are no longer visible. However, it was confirmed that light was focused without diverging in a horizontal direction (the y-axis). The line width of each spot was 0.72 mm, and the set wavelength range measurable within an imaging width of 6.34 mm was 4.0 nm. In comparison with the results shown in Figure 8(C), the wavelength range measurable within the same imaging width was 0.82 times greater, and it was thereby possible to confirm that in comparison with a case in which no lenses were installed, the wavelength resolution could be reduced.

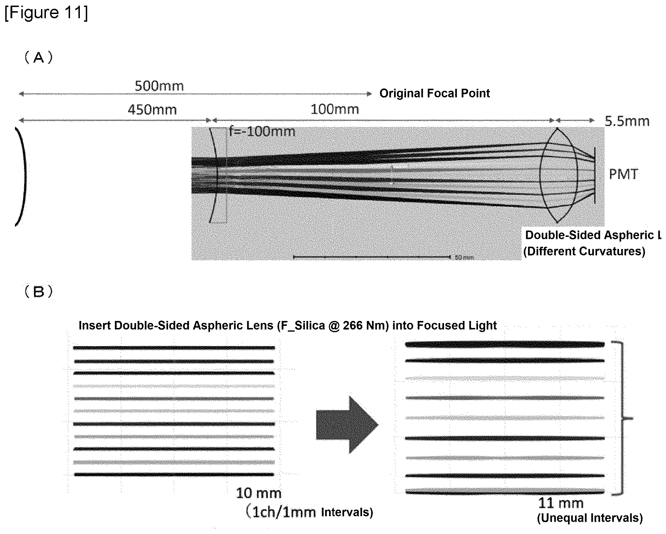

Next, a simulation was performed within the settings of Figure 11(A), using an aspheric cylindrical convex lens with aspherical front and rear surfaces as the cylindrical convex lens disposed directly in front of the detector within the settings of Figure 9(A). A lens having coefficients shown in Table 1 in the aspheric lens function expressed by equation (1) above was used as the aspheric lens. Note that in Table 1, S1 denotes the concave lens-side surface and S2 denotes the array detector-side surface. As a result, as shown in Figure 11(B), it was found that the light passing through the vicinity of the center of the lens was dispersed to the plurality of channels, and the light passing through the lens ends was focused as a result of bundling of the wavelength range. Note that by changing the curvature at the two ends and the center of the lens, the focusing channel for each wavelength can be changed, and when the curvature increases, the lens may be dispersed into a plurality of lenses.

[Table 1]

|  | S1 | S2 |
|---|---|---|
| R | 20 | $\infty$ (Planar) |
| k | 0 | 0 |
| $\alpha_1$ | -4.400e-3 | -0.014 |
| $\alpha_2$ | 0 | -5.859e-5 |
| $\alpha_3$ | 0 | -6.000e-8 |

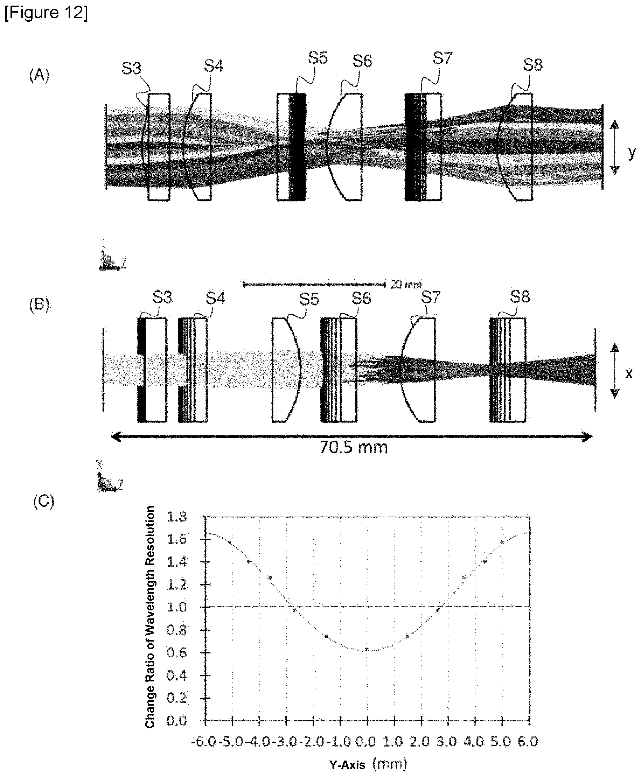

Finally, a simulation was performed under settings using a relay lens, shown in Figures 12(A) and (B), envisaging a case in which the optical element for changing the wavelength resolution is a relay lens disposed directly in front of the array detector. In Figures 12(A) and (B), a leftmost end is the position in which the detector was originally disposed (the original imaging position of the spectroscopic element), and a rightmost end is the position in which the detector was actually disposed. Figure 12(A) is a plan view of the relay lens (a view seen from the x-axis direction), and Figure 12(B) is a side view of the relay lens (a view seen from the y-axis direction). The relay lens was constituted by 6 cylindrical lenses extending respectively in the x-axis direction, the x-axis direction, the y-axis direction, the x-axis direction, the y-axis direction, and the x-axis direction from the left of Figures 12(A) and (B). Further, an aspheric cylindrical lens is disposed at the leftmost end, while the other lenses are spherical cylindrical lenses. As shown in Figures 12(A) and (B), S3-S8 represent the curved surfaces of the respective lenses in order from the left, where S3 is an aspherical surface having coefficients shown in Table 2 in the aspheric lens function expressed by equation (1) above, and the surfaces of S4-S8 are spherical surfaces having curvature radii shown in Table 2.

[Table 2]

|  | S3 | S4 | S5 | S6 | S7 | S8 |
|---|---|---|---|---|---|---|
| **Axis** | x | x | y | x | y | x |
| **R** | 6.03 | 13.8 | 13.8 | 11.5 | 11.5 | 11.5 |
| **k** | 0 | - | - | - | - | - |
| $\alpha_1$ | 0 | - | - | - | - | - |
| $\alpha_2$ | -6.40e-3 | - | - | - | - | - |
| $\alpha_3$ | 3.67e-4 | - | - | - | - | - |
| $\alpha_4$ | -1.59e-5 | - | - | - | - | - |
| $\alpha_5$ | 3.55e-7 | - | - | - | - | - |
| $\alpha_6$ | -3.60e-9 | - | - | - | - | - |

Figure 12(C) shows simulation results. Figure 12(C) shows a distribution of change in the wavelength resolution along the y-axis before and after light becomes incident on the relay lens. Each point plotted on the graph represents a ratio of a wavelength width included per unit length of the y-axis direction before and after light becomes incident on the relay lens. The results show that the wavelength resolution in a central portion (the vicinity of y = 0) increased (decreased as a numerical value), and the wavelength resolution at the end portions decreased (increased as a numerical value).

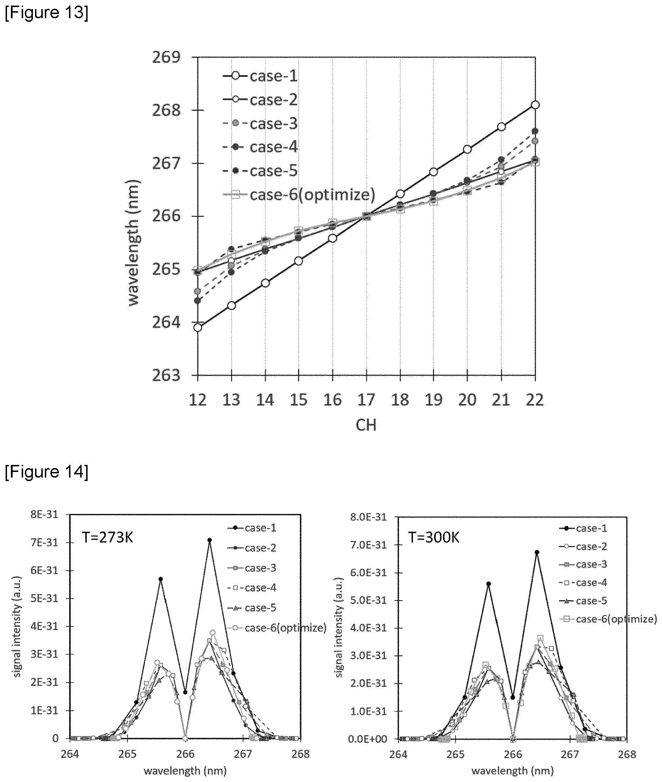

Next, the effects of changes in the light-receiving device for lidar on the accuracy of air temperature measurement were simulated. Using the wavelength resolution (0.42 nm) in a case where two diffraction gratings of 2400 mm$^{-1}$ and 3600 mm$^{-1}$ are used as a reference, the spectrum on the array detector was changed by introducing an optical element in front of the array detector, and the degree of change in the accuracy of air temperature measurement by the meteorological observation lidar was simulated. Figure 13 shows the wavelength settings of the channels of the array detector.

In Figure 13, cases 1-6 are wavelength settings assumed to be obtained from settings of the light-receiving device for lidar shown in the following table. Note that an aspheric lens 1 in Table 3 is a lens having the coefficients shown in Table 1 in the aspheric lens function expressed by equation (1) above.

[Table 3]

| case | Settings of light-receiving device for lidar |
|---|---|
| 1 | Using diffraction gratings of 2400 mm$^{-1}$ and 3600 mm$^{-1}$ (reference) |
| 2 | Setting in which focus wavelength position of case 1 is widened by a multiple of two (concave cylindrical lens + convex cylindrical lens) |
| 1 | Using diffraction gratings of 2400 mm$^{-1}$ and 3600 mm$^{-1}$ (reference) |
| 3 | Concave cylindrical lens + aspheric lens 1 |
| 4 | Concave cylindrical lens + aspheric lens 2 |
| 5 | Concave cylindrical lens + aspheric lens 3 |
| 6 | Using relay lens of Fig. 12 |

Figure 14 shows signal intensity distributions of rotational Raman spectra obtained with respective detector settings when a laser with a wavelength of 266 nm was emitted. The intensity differences between the channels tend to increase as the air temperature decreases. Note that here, in order to focus on the wavelength resolution of the detector, only the detection settings of the detector (an effective width and a partition per channel of 0.8 mm and 0.2 mm, respectively) and the signal intensity dependence due to coincidence loss and crosstalk were taken into consideration, while laser wavelength fluctuations and deviation of the center position of the detected wavelengths were ignored. Further, it was assumed that the calibration signal used for air temperature estimation was acquired when the channel with the largest signal intensity was 20 MHz, and calculations were performed in cases where the same channel of the observation signal was changed from 2 to 100 MHz. Signals from the channel having the largest signal intensity to a channel having 1/20 thereof were used as the signals used for air temperature estimation.

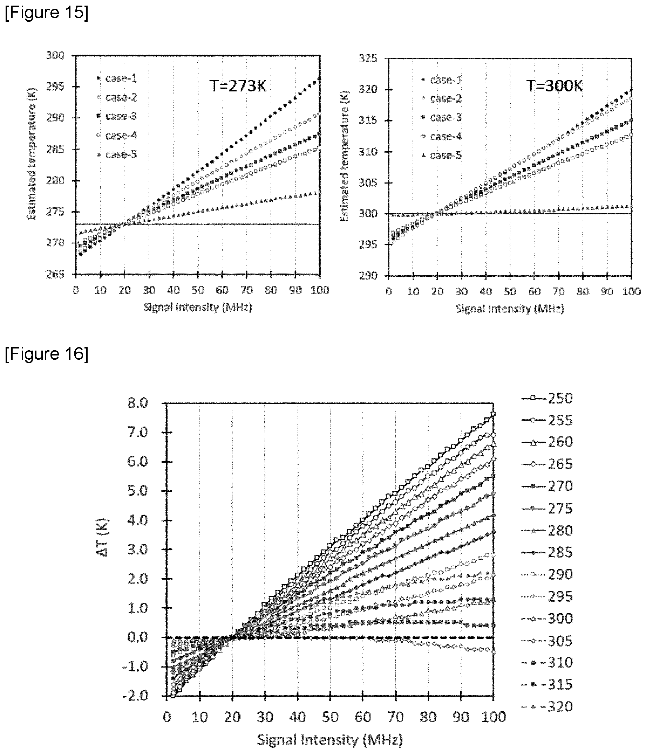

First, Figure 15 shows air temperature estimation (cases 1-5) when signal intensity correction was not performed. Air temperatures (273 K, 300 K) set when the observation value had the same signal intensity (20 MHz) as the calibration spectrum were obtained, and the estimation accuracy steadily deteriorated as the signal intensity difference between calibration and observation increased. Further, the estimation accuracy improved under the settings shown in Figure 14, in which the signal intensity differences between the channels decreased. Particularly in case 5 when T = 300 K, it was found that even without performing signal intensity correction, the air temperature was determined with an accuracy of 1 K or less up to a signal intensity ratio of 4 (calibration signal: 20 MHz, observation signal: 80 MHz).

To examine case 5 in more detail, the estimation accuracy was calculated under assumed air temperatures of 250-320 K (Figure 16). At air temperatures of 300-315 K, with the settings of case 5, it was possible to perform highly accurate estimation irrespective of the signal intensity, even without intensity correction. This suggests that a lens design corresponding to the air temperature range to be observed is effective. Calibration for correcting the signal intensity is the main factor that determines the accuracy during air temperature estimation, and therefore, if the contribution thereof can be reduced, this will lead to a reduction in the calibration frequency and enable deployment in a variety of locations and expansion of the observation altitude range.

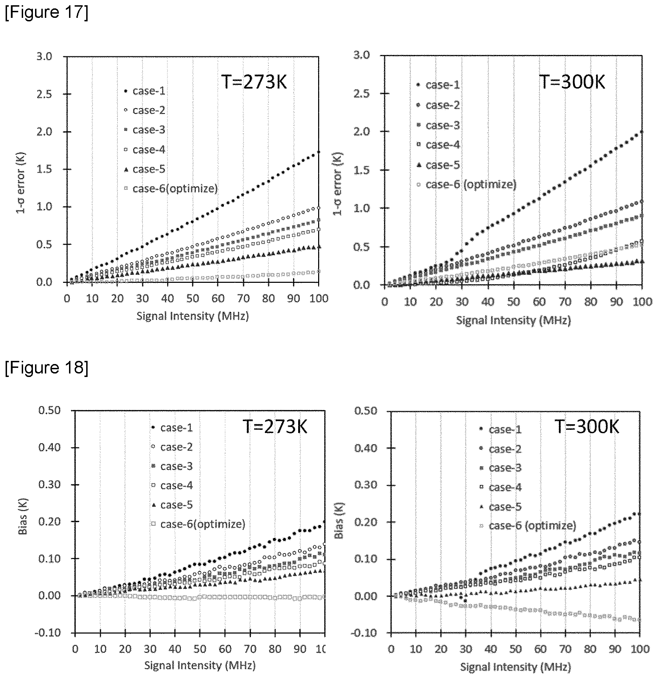

Next, Figures 17 and 18 respectively show the air temperature estimation accuracy and bias (cases 1-6) after performing similar signal intensity correction to that of an actual operation. Here, in order to statistically estimate the effect of errors in the signal intensity correction value, a normal distribution error of $1\sigma = 5\%$ was applied to the signal intensity correction value, whereupon 100 calculations were performed for each signal intensity. The estimation accuracy steadily improved toward the signals of Figure 14, in which the intensity differences in the rotational Raman spectrum are small. From the above simulations, it was found that when the difference between the signal intensity at the time of calibration and the observation signal intensity is large, the accuracy of air temperature estimation is improved by 2 to 5 times or more by introducing an aspheric lens. With this method, an improvement in accuracy can be expected simply by inserting a plurality of lenses into current settings, and as a result, costs can be reduced.

**Reference Signs List**

| | |
|---|---|
| 1, 1A | Irradiation device |
| 2, 2A | Light-receiving device |
| 10 | Laser device |
| 12, 26 | Mirror |
| 14 | Beam expander |
| 16 | Ground-based calibration device |
| 20, 166 | Light-receiving unit |
| 21 | Diaphragm |
| 22, 27 | Spectroscopic element |
| 23 | Signal processing unit |
| 25 | Slit |
| 28a | Optical fiber |

| 28b | Optical fiber coupler |
|---|---|
| 29 | Removal element |
| 100, 200 | Lidar |
| 162 | Temperature control device |
| 164 | Thermo-hygrometer |
| 231 | Aspheric lens |
| 232 | Array detector |
| 233 | Optical element |
| 241, 242, 243, 244 | Concave mirror |

**Claims**

1. A light-receiving device for a lidar that detects scattered laser light, the light-receiving device for lidar comprising:

   a spectroscopic element that disperses received light to produce wavelength-dispersed light in one axial direction;
   an optical element that sets a wavelength resolution, with respect to a wavelength dispersion axis direction of the dispersed light, of light having relatively high intensity, within the dispersed light, to be higher than the wavelength resolution, with respect to the wavelength dispersion axis direction of the dispersed light, of light having relatively low intensity; and
   an array detector that detects the light whose spectrum has been changed by the optical element.

2. The light-receiving device for a lidar according to claim 1,
   wherein the dispersed light has a spectral shape in which the intensity near a center wavelength is relatively high and the intensity near spectrum ends is relatively low.

3. The light-receiving device for a lidar according to claim 2,
   wherein the optical element sets the wavelength resolution, with respect to the wavelength dispersion axis direction of the dispersed light, of light $L_c$ having wavelengths near the center wavelength of the spectrum, within the dispersed light, to be higher than the wavelength resolution, with respect to the wavelength dispersion axis direction of the dispersed light, of light $L_e$ having wavelengths near the spectrum ends of the spectrum.

4. The light-receiving device for a lidar according to claim 3,
   wherein the optical element increases the wavelength resolution, with respect to the wavelength dispersion axis direction of the dispersed light, of the light $L_c$ and reduces the wavelength resolution, with respect to the wavelength dispersion axis direction of the dispersed light, of the light $L_e$.

5. The light-receiving device for a lidar according to claim 3,
   wherein the optical element is either an aspheric lens or a combination of an aspheric lens and one or more other optical elements.

6. The light-receiving device for a lidar according to claim 5,

   wherein, when a propagation direction of the dispersed light is defined as a z-axis direction and the wavelength dispersion axis direction of the dispersed light is defined as a y-axis direction,
   the aspheric lens is arranged so that the optical axis is substantially aligned with an optical path of the light $L_c$ as seen from an x-axis direction orthogonal to the z-axis and the y-axis, and
   the aspheric lens sets the wavelength resolution, in the y-axis direction, of light passing through the vicinity of the optical axis to be higher than the wavelength resolution, in the y-axis direction, of light passing through regions farther from the optical axis in the y-axis direction.

7. The light-receiving device for a lidar according to claim 6,
   wherein the aspheric lens is a cylindrical lens that extends in the x-axis direction.

8. The light-receiving device for a lidar according to claim 1,
   wherein the spectroscopic element includes a diffraction grating.

9. The light-receiving device for a lidar according to claim 1,
   wherein the optical element is a relay lens disposed directly in front of the array detector.

10. The light-receiving device for a lidar according to any one of claims 1-9, for use in meteorological observation.

11. A lidar comprising:

   an irradiation device that emits laser light; and
   the light-receiving device for a lidar according to any one of claims 1-9.

12. A meteorological observation lidar comprising:

   an irradiation device that emits laser light into the atmosphere; and
   the light-receiving device for a lidar according to claim 10.

13. The meteorological observation lidar according to claim 12,
   wherein the laser light emitted by the irradiation device is laser light in a UV region.

14. The meteorological observation lidar according to claim 13, for use in air temperature measurement.

[Figure 1]

Double-Harmonic Crystal,Fourth-Harmonic Crystal

Spectroscopic Element

Optical Element

Signal Processing Unit

Array Detector

100

[Figure 2]

[Figure 3]

(A)

(B)

[Figure 4]

(A)  21  22  233  232

$L_L$  $L_H$

Spectroscopic
Element

Optical
Element

x
z
y

$L_L$

(B)

Y-Axis

(C)

X-Axis

[Figure 5A]

[Figure 5B]

EP 4 545 923 A1

242

244

243

241

29

233

Optical Element
Relay Lens

232

27

26

25

22

21

20

Li

[Figure 6]

[Figure 7]

(A)

(B)

PMT

10 mm

y

z

(C)

10 mm
(1mm/1cn Intervals)

y

x

4 mm

[Figure 8]

[Figure 9]

(A)

＋62mm

f=100mm    f=100mm

50 mm

(B)

10 mm
（1mm/1ch Intervals)

20 mm
（0.5mm/1ch Intervals)

[Figure 10]

(A)

242

420 mm

65 mm

74.57 mm

CCD

(B)

B=707.0

B=709.0

B=705.4

B=707.5

B=709.4

B=706.0

B=708.0

B=706.5

B=708.5

[Figure 11]

（A）

500mm
450mm    100mm    Original Focal Point
f=-100mm    5.5mm

PMT

Double-Sided Aspheric L
(Different Curvatures)

（B）

**Insert Double-Sided Aspheric Lens (F_Silica @ 266 Nm) into Focused Light**

10 mm
（1ch/1mm Intervals)

11 mm
(Unequal Intervals)

[Figure 12]

[Figure 13]

[Figure 14]

[Figure 15]

[Figure 16]

[Figure 17]

[Figure 18]

<div align="center">

**INTERNATIONAL SEARCH REPORT**

</div>

| | International application No. |
|---|---|
| | **PCT/JP2023/013550** |

## A. CLASSIFICATION OF SUBJECT MATTER

*G01J 3/44*(2006.01)i; *G01W 1/00*(2006.01)i; *G01S 17/95*(2006.01)i; *G01N 21/65*(2006.01)i
FI: G01J3/44; G01N21/65; G01S17/95; G01W1/00 Z

According to International Patent Classification (IPC) or to both national classification and IPC

## B. FIELDS SEARCHED

Minimum documentation searched (classification system followed by classification symbols)

G01J3/00-3/52; G01N21/00-21/958; G01W1/00-1/18; G01S17/00-17/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | WO 2020/075869 A1 (EKO INSTRUMENTS CO., LTD.) 16 April 2020 (2020-04-16) claim 1, paragraphs [0026], [0041]-[0047], fig. 2, 8-9 | 1-14 |
| Y | WO 2018/070469 A1 (HORIBA, LTD.) 19 April 2018 (2018-04-19) paragraph [0041], fig. 1, 5 | 1-14 |
| Y | CN 1719231 A (HONGFUJIN PRECISION INDUSTRY (SHENZHEN) CO., LTD.) 11 January 2006 (2006-01-11) page 3, lines 16-29, fig. 1 | 1-14 |
| Y | JP 7-1206 B2 (RES. DEV. CORP. OF JAPAN) 11 January 1995 (1995-01-11) page 4, right column, lines 10-13, fig. 1 | 1-14 |
| A | CN 113075693 A (TIAN, Bin) 06 July 2021 (2021-07-06) entire text, all drawings | 1-14 |
| A | JP 9-166489 A (YOKOGAWA ELECTRIC CORP.) 24 June 1997 (1997-06-24) entire text, all drawings | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/013550**

| Patent document cited in search report | | | Publication date (day/month/year) | Patent family member(s) | | | Publication date (day/month/year) |
|---|---|---|---|---|---|---|---|
| WO | 2020/075869 | A1 | 16 April 2020 | US 2021/0389471 A1 paragraphs [0037], [0057]-[0065], fig. 2, 8-9 EP 3865836 A1 CN 112840188 A | | | |
| WO | 2018/070469 | A1 | 19 April 2018 | (Family: none) | | | |
| CN | 1719231 | A | 11 January 2006 | (Family: none) | | | |
| JP | 7-1206 | B2 | 11 January 1995 | (Family: none) | | | |
| CN | 113075693 | A | 06 July 2021 | (Family: none) | | | |
| JP | 9-166489 | A | 24 June 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020075869 A